# EUROPEAN PATENT APPLICATION

(11) **EP 4 489 169 A1**
(43) Date of publication of application: **08.01.2025**
(21) Application number: 22928837.8
(22) Date of filing: 28.09.2022
(51) Int. Cl.: H01M 10/0562, H01M 4/505, H01M 4/525, H01M 10/052

(54) **ALL-SOLID-STATE BATTERY**

(30) Priority: 28.02.2022 JP 2022029457
(71) Applicant: TDK Corporation, Tokyo 103-6128 (JP)
(72) Inventor: SATO Hiroshi, Tokyo 103-6128 (JP); NAKAMURA Tomoko, Tokyo 103-6128 (JP); YAMAGUCHI Yuusuke, Tokyo 103-6128 (JP); SUZUKI Shota, Tokyo 103-6128 (JP); NAGATOMI Ayaka, Tokyo 103-6128 (JP)
(74) Representative: Epping - Hermann - Fischer
(86) International application number: PCT/JP2022/036099
(87) International publication number: WO 2023/162316

(57) **Abstract**

An all-solid-state battery according to the present embodiment includes a sintered body having a positive electrode, a negative electrode and a solid electrolyte layer that is between the positive electrode and the negative electrode, the positive electrode contains a compound having a spinel structure, the solid electrolyte layer contains a solid electrolyte having a γ-Li₃PO₄-type crystal structure, the compound having a spinel structure is represented by Li_{α}M_{β}Mn_{2-β}O₄ ··· (1), and, in the formula (1), M is one or more atoms selected from transition metals, 0.8 ≤ α ≤ 1.2 is satisfied, and 0.1 ≤ β ≤ 0.9 is satisfied.

## Description

### Technical Field

The present invention relates to an all-solid-state battery. Priority is claimed on Japanese Patent Application No. 2022-029457, filed February 28, 2022, the content of which is incorporated herein by reference.

### Background Art

In recent years, the development of electronics technology has been remarkable, and attempts have been made for reduction in size, weight and thickness and multi-functionalization of mobile electronic devices. Accordingly, there has been a strong desire for reduction in size, weight and thickness and improvement in reliability of batteries, which serve as power supplies of electronic devices, and all-solid-state batteries in which a solid electrolyte is used as an electrolyte have been attracting attention.

There are thin film-type all-solid-state batteries and bulk-type all-solid-state batteries. Thin film-type all-solid-state batteries are produced using a thin film technique such as a physical vapor deposition (PVD) method or a sol-gel method. Bulk-type all-solid-state batteries are produced using a powder forming method, a sintering method or the like. For individual all-solid-state batteries, applicable substances vary and performances vary due to differences in the manufacturing method. For example, for the bulk-type all-solid-state batteries in which a sintered body is used, there is a need to use a material capable of withstanding sintering, but it is possible to thicken each layer, which makes the capacities high.

For example, Patent Document 1 discloses sintering-type all-solid-state batteries in which an oxide-based solid electrolyte is used as a solid electrolyte. In the all-solid-state batteries described in Patent Document 1, several materials that can be applied to the positive electrode active material layers and the solid electrolyte layers have been proposed.

### Citation List

### Patent Document

Patent Document 1: PCT International Publication No. WO 2007/135790

### Summary of Invention

### Technical Problem

Some of the all-solid-state batteries described in Patent Document 1 have a high internal resistance.

The present invention has been made in consideration of the above-described problem, and an object of the present invention is to provide an all-solid-state battery having a low internal resistance.

### Solution to Problem

In order to achieve the aforementioned object, the following means is provided.
(1) An all-solid-state battery according to a first aspect includes a sintered body. The sintered body has a positive electrode, a negative electrode and a solid electrolyte layer that is between the positive electrode and the negative electrode. The positive electrode contains a compound having a spinel structure. The solid electrolyte layer contains a solid electrolyte having a γ-Li₃PO₄-type crystal structure. The compound having a spinel structure is represented by Li_{α}M_{β}Mn_{2-β}O₄ ··· (1). In the formula (1), M is one or more atoms selected from transition metals, 0.8 ≤ α ≤ 1.2 is satisfied, and 0.1 ≤ β ≤ 0.9 is satisfied.
(2) In the all-solid-state battery according to the aspect, M may be Ni. The formula (1) is represented by Li_{α}Ni_{β}Mn_{2-β}O₄ ··· (2), and 0.4 ≤ β ≤ 0.6 is satisfied.
(3) In the all-solid-state battery according to the aspect, the positive electrode may further contain Ag or a Ag alloy.
(4) In the all-solid-state battery according to the aspect, the positive electrode may include a first layer and a second layer. The first layer contains the compound and Ag or a Ag alloy, and the second layer is in contact with at least one main surface of the first layer.
(5) In the all-solid-state battery according to the aspect, a volume percent of Ag and the Ag alloy in the first layer may be 40% or more and 85% or less.
(6) In the all-solid-state battery according to the aspect, a solid electrolyte that is contained in the solid electrolyte layer may contain Li₃₊ₓSiₓP₁₋ₓO₄ (0.2 ≤ x ≤ 0.6).

### Advantageous Effects of Invention

The all-solid-state battery according to the aspect has a low internal resistance.

### Brief Description of Drawings

FIG. 1 is a cross-sectional view of an all-solid-state battery according to a first embodiment.
FIG. 2 is a cross-sectional view showing a characteristic part of the all-solid-state battery according to the first embodiment in an enlarged manner.
FIG. 3 is a cross-sectional view showing another example of the characteristic part of the all-solid-state battery according to the first embodiment in an enlarged manner.
FIG. 4 is a cross-sectional view showing a characteristic part of another example of a positive electrode of the all-solid-state battery according to the first embodiment in an enlarged manner.
FIG. 5 is a cross-sectional view showing a characteristic part of still another example of the positive electrode of the all-solid-state battery according to the first embodiment in an enlarged manner.
FIG. 6 is a cross-sectional view showing still another example of the characteristic part of the all-solid-state battery according to the first embodiment in an enlarged manner.

### Description of Embodiment

Hereinafter, the present embodiment will be described in detail with appropriate reference to drawings. In the drawings to be used in the following description, there are cases where a characteristic part is shown in an enlarged manner for convenience in order to facilitate the understanding of a characteristic of the present invention, and there are cases where the dimensional ratio or the like of each configuration element is different from the actual one. Materials, dimensions and the like to be exemplified in the following description are simply examples, and the present invention is not limited thereto and can be modified as appropriate within the scope of the gist of the present invention and carried out.

Directions will be defined. The lamination direction of a laminated body 4 is defined as a z direction, one direction in a plane orthogonal to the z direction is defined as an x direction, and a direction orthogonal to the x direction and the z direction is defined as a y direction. Hereinafter, there will be cases where one direction in the z direction is expressed as "up" and a direction opposite to the above-described direction is expressed as "down." Up and down do not always match the direction in which the force of gravity is applied.

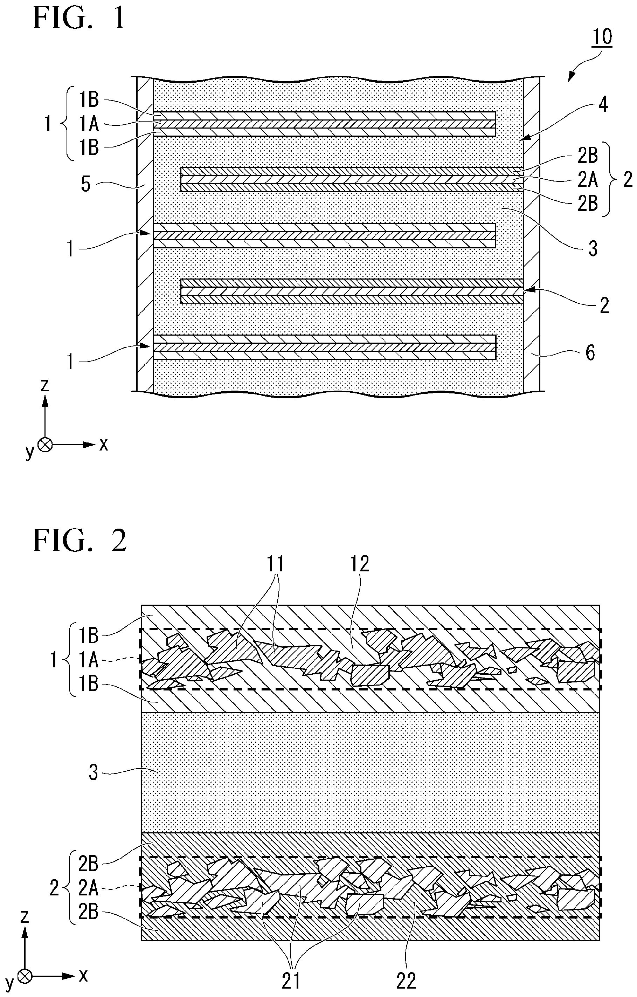

FIG. 1 is a schematic cross-sectional view of an all-solid-state battery 10 according to the present embodiment. The all-solid-state battery 10 has the laminated body 4 and terminal electrodes 5 and 6. Each of the terminal electrodes 5 and 6 is in contact with each of the opposite surfaces of the laminated body 4. The terminal electrodes 5 and 6 extend in the z direction, which intersects with (is orthogonal to) the laminate surface of the laminated body 4.

The laminated body 4 has positive electrodes 1, negative electrodes 2 and a solid electrolyte layer 3. The laminated body 4 is a sintered body obtained by laminating and sintering the positive electrodes 1, the negative electrodes 2 and the solid electrolyte layer 3. The number of layers of the positive electrodes 1 or the negative electrodes 2 does not matter. The solid electrolyte layer 3 is between at least the positive electrode 1 and the negative electrode 2. Between the positive electrode 1 and the terminal electrode 6 and between the negative electrode 2 and the terminal electrode 5, there is, for example, the same solid electrolyte as the solid electrolyte layer 3. The positive electrodes 1 are in contact with the terminal electrode 5 at one end. The negative electrodes 2 are in contact with the terminal electrode 6 at one end.

The all-solid-state battery 10 is charged and discharged by performing the transfer of ions between the positive electrodes 1 and the negative electrodes 2 through the solid electrolyte layer 3. The all-solid-state battery 10 shown in FIG. 1 is a stacked battery, but the all-solid-state battery 10 may be a wound battery. The all-solid-state battery 10 can be used in, for example, laminated batteries, square batteries, cylindrical batteries, coin-like batteries, button-like batteries and the like. In addition, the all-solid-state battery 10 may be an immersion type in which the solid electrolyte layer 3 is dissolved or dispersed in a solvent.

### "Positive electrode"

FIG. 2 is an enlarged view of a characteristic part of the all-solid-state battery 10 according to a first embodiment. The positive electrode 1 has, for example, a positive electrode current collector layer 1A and positive electrode active material layers 1B. The positive electrode current collector layer 1A is an example of a first layer, and the positive electrode active material layer 1B is an example of a second layer. The second layer is in contact with at least one main surface of the first layer. The positive electrode 1 contains a compound having a spinel structure that satisfies a formula (1), which will be described below. The positive electrode 1 may further contain Ag or a Ag alloy.

### [Positive electrode current collector layer]

The positive electrode current collector layer 1A has, for example, a positive electrode current collector 11 and a positive electrode active material 12. In this case, a space between an xy plane that passes through the uppermost part of the positive electrode current collector 11 and an xy plane that passes through the lowermost part of the positive electrode current collector 11 is regarded as the positive electrode current collector layer 1A.

The positive electrode current collector 11 is composed of a plurality of current collector particles. The plurality of current collector particles are connected to each other and are electrically connected to each other in an xy plane. The positive electrode current collector layer 1A contains, for example, a metal or alloy containing any one or more selected from the group consisting of Ag, Pd, Au and Pt. These metals or alloys do not melt even when the laminated body 4 is heated in the atmosphere and do not easily oxidize. The positive electrode current collector layer 1A preferably contains Ag or a Ag alloy. The positive electrode current collector 11 is, for example, a AgPd alloy, Au, Pt or a mixture thereof. The composition ratio of each composition of the alloy does not matter.

The total volume percent (Va) of Ag and the Ag alloy in the positive electrode current collector layer 1A is, for example, 40% or more and 85% or less. The volume percent approximately matches, for example, the area percent in a cross section that is measured with a scanning electron microscope. Therefore, the area percent in the cross section that is measured with a scanning electron microscope can be regarded as the volume percent as it is. Ag and the Ag alloy can be distinguished due to contrast in an image that is obtained using a scanning electron microscope. In addition, in a case where only the volume ratio of Ag is extracted from Ag and the Ag alloy, only the volume ratio of Ag can be obtained by quantitatively analyzing the composition ratio by energy-dispersive X-ray spectroscopy (EDS) and obtaining the product of the proportion of Ag and the volume ratio between Ag and the Ag alloy.

The positive electrode active material 12 is present in the positive electrode current collector layer 1A together with the positive electrode current collector 11 in a mixed manner. The positive electrode active material 12 is in contact with the positive electrode current collector 11. When the positive electrode active material 12 is contained in the positive electrode current collector layer 1A, lithium ions are smoothly transferred in the positive electrode current collector layer 1A. The positive electrode 1 contains a compound having a spinel structure as the positive electrode active material 12. The compound having a spinel structure is represented by Li_{α}M_{β}Mn_{2-β}O₄ ··· (1).

M in the formula (1) is one or more atoms selected from transition metals. M in the formula (1) is, for example, any one or more atoms selected from the group consisting of Ni, Co and Ti. M in the formula (1) is, for example, Ni. In a case where M in the formula (1) is Ni, the formula (1) is represented by Li_{α}Ni_{β}Mn_{2-β}O₄ ··· (2).

α in the formula (1) and the formula (2) satisfies 0.8 ≤ α ≤ 1.2. β in the formula (1) and the formula (2) satisfies 0.1 ≤ β ≤ 0.9 and preferably satisfies 0.4 ≤ β ≤ 0.6.

The compound represented by the formula (1) is, for example, LiNi_{0.1}Mm_{1.9}O₄, LiNi_{0.5}Mm_{1.5}O₄, LiNi_{0.9}Mn_{1.1}O₄, LiCo_{0.1}Mn_{1.9}O₄, LiCo_{0.5}Mn_{1.5}O₄, LiCo_{0.9}Mn_{1.1}O₄, LiTi_{0.1}Mn_{1.9}O₄, LiTi_{0.5}Mn_{1.5}O₄ or LiTi_{0.9}Mn_{1.1}O₄.

The positive electrode active material 12 may also contain, aside from the compound having a spinel structure represented by the formula (1), a transition metal oxide containing any one or more selected from the group consisting of Co, Ni, Mn, Fe and V. The positive elecrode active material 12 may also contain, for example, LiNi_{0.5}Mn_{1.5}O₄ and LiMn₂O₄ which have a spinel structure.

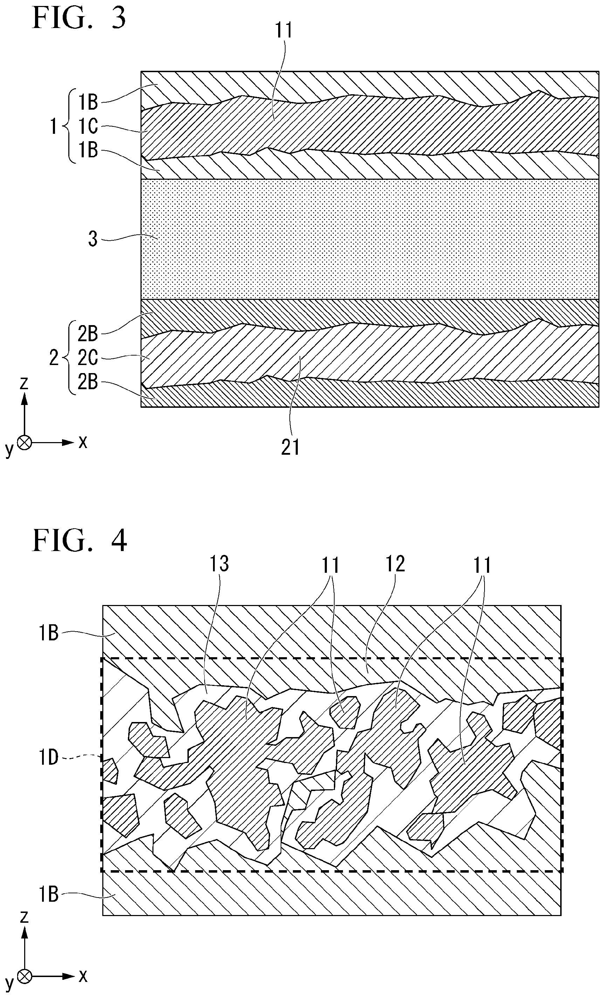

FIG. 2 shows an example where the positive electrode current collector 11 is composed of a plurality of current collector particles, but the current collector is not limited to this case. FIG. 3 is an enlarged view of a characteristic part of another example of the all-solid-state battery according to the first embodiment. A positive electrode current collector layer 1C shown in FIG. 3 is composed of a foil-like positive electrode current collector 11 that spreads in an xy plane. The positive electrode current collector 11 may have a form of each of a punched membrane or expanded that spreads in an xy plane. The positive electrode current collector layer 1C may be composed of the positive electrode current collector 11.

### [Positive electrode active material layer]

The positive electrode active material layer 1B is formed on one surface or both surfaces of the positive electrode current collector layer 1A. The positive electrode active material layer 1B contains a positive electrode active material. The positive electrode active material layer 1B may contain a conductive assistant, a binder or the above-described solid electrolyte. In a case where the positive electrode active material layer 1B contains the solid electrolyte, an xy plane that passes through the outermost part of the positive electrode active material is regarded as the boundary between the positive electrode active material layer 1B and the solid electrolyte layer 3.

### (Positive electrode active material)

The positive electrode active material contains a compound having a spinel structure represented by the formula (1). The positive electrode active material 12 may also contain, aside from the compound having a spinel structure represented by the formula (1), a transition metal oxide containing any one or more selected from the group consisting of Co, Ni, Mn, Fe and V. The positive electrode active material 12 may also contain, for example, LiNi_{0.5}Mn_{1.5}O₄ and LiMn₂O₄ which have a spinel structure.

### (Conductive assistant)

The conductive assistant is not particularly limited as long as the conductive assistant makes the electron conductivity in the positive electrode active material layers 1B favorable, and a well-known conductive assistant can be used. The conductive assistant is, for example, a carbon-based material such as graphite, carbon black, graphene or a carbon nanotube, a metal such as gold, platinum, silver, palladium, aluminum, copper, nickel, stainless steel or iron, a conductive oxide such as ITO or a mixture thereof. The shape of the conductive assistant may be powdery or fibrous.

### (Binder)

The binder joins the positive electrode current collector layer 1A and the positive electrode active material layer 1B, the positive electrode active material layer 1B and the solid electrolyte layer 3, and a variety of materials that configure the positive electrode active material layer 1B together.

The binder can be used to an extent that the function of the positive electrode active material layer 1B is not lost. The binder may not be contained if not necessary. The content of the binder in the positive electrode active material layer 1B is, for example, 0.5 vol% or more and 30 vol% or less of the positive electrode active material layer. When the content of the binder is sufficiently low, the resistance of the positive electrode active material layer 1B becomes sufficiently low. Here, the vol% approximately matches, for example, the area% in a cross section that is measured with a scanning electron microscope. Therefore, the area ratio in the cross section that is measured with a scanning electron microscope can be regarded as the volume ratio as it is.

The binder needs to be capable of the above-described joining, and examples thereof include fluororesins such as polyvinylidene fluoride (PVDF) and polytetrafluoroethylene (PTFE). Furthermore, in addition to the above-listed binders, for example, cellulose, styrene/butadiene rubber, ethylene/propylene rubber, polyimide resins, polyamide-imide resins and the like may also be used as the binder. In addition, conductive polymers having electron conductivity or ion-conductive polymers having ion conductivity may also be used as the binder. Examples of the conductive polymers having electron conductivity include polyacetylene and the like. In this case, the binder also exhibits the function of the conductive assistant, and there is thus no need to add the conductive assistant. As the ion-conductive polymers having ion conductivity, for example, polymers that conduct lithium ions or the like can be used, and examples thereof include polymers obtained by compositing a monomer of a polymer compound (a polyether-based polymer compound such as polyethylene oxide or polypropylene oxide, polyphosphazene or the like) and a lithium salt such as LiClO₄, LiBF₄ or LiPF₆ or an alkali metal salt mainly containing lithium. A polymerization initiator that is used for the compositing is, for example, a photopolymerization initiator or thermopolymerization initiator suitable for the above-listed monomers and the like. Examples of characteristics required for the binder include oxidation/reduction resistance and favorable adhesiveness.

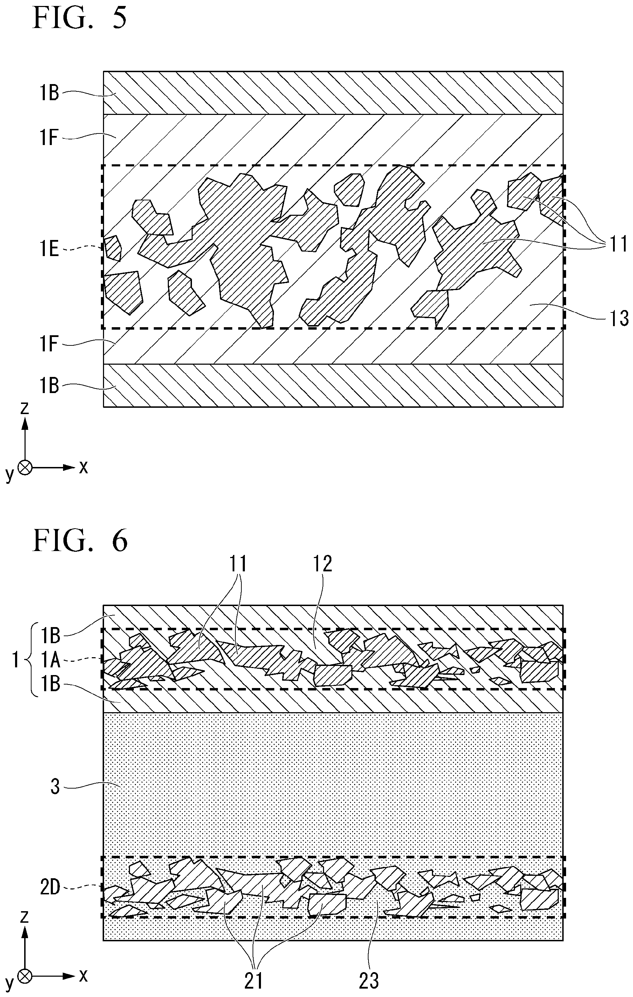

Hitherto, specific examples of one example of the positive electrode have been described, but the positive electrode is not limited to these examples. For example, the positive electrode may be a single layer in which the positive electrode current collector 11 and the positive electrode active material 12 are present in a mixed manner. In addition, for example, FIG. 4 and FIG. 5 are cross-sectional views of other examples of the positive electrode according to the first embodiment.

A positive electrode shown in FIG. 4 has a positive electrode current collector layer 1D and the positive electrode active material layers 1B. The positive electrode current collector layer 1D contains the positive electrode current collector 11, the positive electrode active material 12 and an oxide 13. The oxide 13 is, for example, a Ag-containing oxide and is, for example, AgCoO₂ or AgMn₂O₄. The oxide 13 contains, for example, both the configuration element of the positive electrode current collector 11 and the configuration element of the positive electrode active material 12. The oxide 13 prevents the oxidation of Ag that is contained in the positive electrode current collector 11. When the oxide 13 is present between the positive electrode current collector 11 and the positive electrode active material 12, the cycle characteristics of the all-solid-state battery 10 improve.

A positive electrode shown in FIG. 5 has a positive electrode current collector layer 1E. intermediate layers 1F and the positive electrode active material layers 1B. The positive electrode current collector layer 1E contains the positive electrode current collector 11 and the oxide 13. The intermediate layer 1F is composed of the oxide 13. The example shown in FIG. 5 corresponds to a case where the thickness of the oxide 13 is thicker than that in the example shown in FIG. 4. The oxide 13 prevents the oxidation of Ag that is contained in the positive electrode current collector 11, and the cycle characteristics of the all-solid-state battery 10 improve.

### "Solid electrolyte layer"

The solid electrolyte layer 3 contains a solid electrolyte. The solid electrolyte is a substance capable of migrating ions due to an electric field applied from the outside. For example, the solid electrolyte layer 3 conducts lithium ions and impairs the migration of electrons. The solid electrolyte layer 3 is, for example, a sintered body that is obtained by sintering.

The solid electrolyte layer 3 contains, for example, a solid electrolyte having a γ-Li₃PO₄-type crystal structure. The solid electrolyte having a γ-Li₃PO₄-type crystal structure has excellent ion conductivity. The solid electrolyte is, for example, Li₃₊ₓSiₓP₁₋ₓO₄, Li₃₊ₓSiₓV₁₋ₓO₄, Li₃₊ₓGeₓP₁₋ₓO₄, Li₃₊ₓGeₓV₁₋ₓO₄ or the like and preferably Li₃₊ₓSiₓP₁₋ₓO₄. x satisfies 0.4 ≤ x ≤ 0.8 and preferably satisfies 0.2 ≤ x ≤ 0.6. In addition, the solid electrolyte may be a ternary lithium oxide containing Si, V, Ge and the like.

### "Negative electrode"

The negative electrode 2 has, for example, a negative electrode current collector layer 2A and negative electrode active material layers 2B containing a negative electrode active material.

### "Negative electrode current collector"

The negative electrode current collector layer 2A has, for example, a negative electrode current collector 21 and a negative electrode active material 22. In this case, a space between an xy plane that passes through the uppermost part of the negative electrode current collector 21 and an xy plane that passes through the lowermost part of the negative electrode current collector 21 is regarded as the negative electrode current collector layer 2A.

The negative electrode current collector 21 contains, for example, a metal or alloy containing any one selected from Ag, Pd, Au and Pt. The negative electrode current collector 21 is, for example, Ag, a AgPd alloy, a Li-Ag alloy or a mixture thereof. The negative electrode current collector 21 may be the same as or different from the positive electrode current collector 11. The negative electrode current collector 21 also functions as a negative electrode active material.

As shown in FIG. 3, the negative electrode current collector layer 2C may be composed of the negative electrode current collector 21. In this case, the negative electrode current collector 21 may be a foil that spreads in an xy plane and, additionally, may have a form of each of punched or expanded.

### [Negative electrode active material layer]

The negative electrode active material layer 2B is formed on one surface or both surfaces of the negative electrode current collector layer 2A. The negative electrode active material layer 2B contains a negative electrode active material. The negative electrode active material layer 2B may contain a conductive assistant, a binder or the above-described solid electrolyte. In a case where the negative electrode active material layer 2B contains the solid electrolyte, a space between an xy plane that passes through the uppermost part of the negative electrode active material and an xy plane that passes through the lowermost part of the negative electrode active material is regarded as the negative electrode active material layer 2B.

### (Negative electrode active material)

The negative electrode active material is a compound capable of occluding and releasing ions. The negative electrode active material is a compound exhibiting a lower potential than the positive electrode active material. The negative electrode active material contains, for example, Li₄Ti₅O₁₂, LiTiO₂, Li₂TiO₃ or Li₂TiSiO₅. The negative electrode active material may contain a plurality of active material substances.

### (Conductive assistant)

The conductive assistant makes the electron conductivity of the negative electrode active material layer 2B favorable. As the conductive assistant, the same material as in the positive electrode active material layer 1B can be used.

### (Binder)

The binder joins the negative electrode current collector layer 2A and the negative electrode active material layer 2B, the negative electrode active material layer 2B and the solid electrolyte layer 3, and a variety of materials that configure the negative electrode active material layer 2B together. As the binder, the same material as in the positive electrode active material layer 1B can be used. The content rate of the binder can also be set to the same content rate as in the positive electrode active material layer 1B. The binder may not be contained if not necessary.

In FIG. 2, an example where the negative electrode 2 is composed of the negative electrode current collector layer 2A and the negative electrode active material layers 2B has been shown, but the configuration is not limited to this case. FIG. 6 is an enlarged view of a characteristic part of another example of the all-solid-state battery according to the first embodiment. A negative electrode 2D shown in FIG. 6 contains the negative electrode current collector 21 and the solid electrolyte 23. The negative electrode current collector 21 is, for example, a Ag alloy. The Ag alloy is, for example, a AgPd alloy or a Li-Ag alloy. The Ag alloy also functions as an active material. When the Ag alloy functions as a negative electrode active material, the all-solid-state battery has a high capacity, and the energy density of the all-solid-state battery improves.

### "Method for manufacturing all-solid-state battery"

Next, a method for manufacturing the all-solid-state battery 10 will be described. First, the laminated body 4 is produced. The laminated body 4 is produced by, for example, a simultaneous sintering method or a sequential sintering method.

The simultaneous sintering method is a method in which a material that configures each layer is laminated and the laminated body 4 is then produced by batch sintering. The sequential sintering method is a method in which sintering is performed whenever each layer is formed. The simultaneous sintering method is capable of producing the laminated body 4 with a smaller number of working steps than the sequential sintering method. In addition, the laminated body 4 produced by the simultaneous sintering method becomes denser than the laminated body 4 produced using the sequential sintering method. Hereinafter, a case where the simultaneous sintering method is used will be described as an example.

First, the materials of the positive electrode current collector layer 1A, the positive electrode active material layer 1B, the solid electrolyte layer 3, the negative electrode active material layer 2B and the negative electrode current collector layer 2A, which configure the laminated body 4, are each made into a paste. In the case of the example shown in FIG. 4, a paste is made after the positive electrode current collector 11 is coated with the oxide 13. In the case of the example shown in FIG. 5, the material that configures the intermediate layer 1F is also made into a paste.

A method for making each material into a paste is not particularly limited, and for example, a method in which the powder of each material is mixed into a vehicle to obtain a paste can be used. Here, the vehicle is a collective term for liquid-phase media. The vehicle includes a solvent or a binder.

Next, a green sheet is produced. The green sheet is obtained by applying the paste produced from each material onto a base material such as a polyethylene terephthalate (PET) film, drying the paste as necessary and then peeling off the base material. A method for applying the paste is not particularly limited, and for example, a well-known method such as screen printing, application, transfer or doctor blade can be used.

Next, the green sheet produced from each material is piled up according to a desired order and the desired number of layers laminated to produce a laminated sheet. Upon laminating the green sheets, alignment, cutting or the like is performed as necessary. For example, in the case of producing a parallel or serial-parallel battery, alignment is performed so that the end face of the positive electrode current collector layer 1A and the end face of the negative electrode current collector layer 2A do not match, and each green sheet is piled up.

The laminated sheet may also be produced using a method in which a positive electrode unit and a negative electrode unit are produced and these units are laminated together. The positive electrode unit is a laminated sheet in which the solid electrolyte layer 3, the positive electrode active material layer 1B, the positive electrode current collector layer 1A and the positive electrode active material layer 1B are laminated in this order. In the case of the example shown in FIG. 5, the intermediate layer 1F is laminated between the positive electrode current collector layer 1A and the positive electrode active material layer 1B. The negative electrode unit is a laminated sheet in which the solid electrolyte layer 3, the negative electrode active material layer 2B, the negative electrode current collector layer 2A and the negative electrode active material layer 2B are laminated in this order. The electrode units are laminated so that the solid electrolyte layer 3 of the positive electrode unit and the negative electrode active material layer 2B of the negative electrode unit face each other or the positive electrode active material layer 1B of the positive electrode unit and the solid electrolyte layer 3 of the negative electrode unit face each other.

Next, the produced laminated sheet is pressurized by batch, and the adhesion of each layer is enhanced. The pressurization can be performed by, for example, mold press, warm isostatic press (WIP), cold isostatic press (CIP), isostatic press or the like. The pressurization is preferably performed together with heating. The heating temperature during crimping is set to, for example, 40°C or higher and 95°C or lower. Next, the pressurized laminated body is cut using a dicing device to make chips. In addition, a binder removal treatment and sintering are performed on the chips, whereby the laminated body 4 made of a sintered body is obtained.

The binder removal treatment can be performed as a separate step from a sintering step. A binder removal step heats and decomposes the binder component that is contained in the chips before the sintering step and makes it possible to suppress the binder component being rapidly decomposed in the sintering step. The binder removal step is performed by, for example, heating the chips in the atmosphere at a temperature of 300°C or higher and 800°C or lower for 0.1 hours or longer and 10 hours or shorter. The atmosphere of the binder removal step is an oxygen partial pressure environment in which the materials that configure the positive electrode, the negative electrode and the solid electrolyte are not oxidized and reduced or less likely to be oxidized and reduced, and it is possible to arbitrarily select the type of the atmosphere gas so that the materials that configure the positive electrode, the negative electrode and the solid electrolyte and the gas do not react with each other. For example, the binder removal step may be performed in a nitrogen atmosphere, an argon atmosphere, a nitrogen/hydrogen-mixed atmosphere, a water vapor atmosphere or a mixed atmosphere thereof.

The sintering step is performed with the chips mounted on, for example, a ceramic stand. Sintering is performed by, for example, heating the chips in the atmosphere to 600°C or higher and 1000°C or lower. The sintering time is set to, for example, 0.1 hours or longer and three hours or shorter. The atmosphere of the sintering step is an oxygen partial pressure environment in which the materials that configure the positive electrode, the negative electrode and the solid electrolyte are not oxidized and reduced or less likely to be oxidized and reduced, and it is possible to arbitrarily select the type of the atmosphere gas so that the materials that configure the positive electrode, the negative electrode and the solid electrolyte and the gas do not react with each other. For example, the sintering step may be performed in a nitrogen atmosphere, an argon atmosphere, a nitrogen/hydrogen-mixed atmosphere, a water vapor atmosphere or a mixed atmosphere thereof.

In addition, barrel polishing may be performed on the sintered laminated body 4 (sintered body) that has been put into a cylindrical container together with an abrasive such as alumina. This makes it possible to chamfer the corners of the laminate. The polishing may be performed using sandblasting. The sandblasting is capable of shaving only a specific part, which is preferable.

The terminal electrodes 5 and 6 are formed on the side surfaces of the produced laminated body 4, which are opposite to each other. The terminal electrodes 5 and 6 can be each formed using means, for example, a sputtering method, a dipping method, a screen printing method or a spray coating method. The all-solid-state battery 10 can be produced by performing the above-described steps. In a case where the terminal electrodes 5 and 6 are formed only in predetermined parts, the above-described treatment is performed with the predetermined parts masked with tape or the like.

The all-solid-state battery according to the present embodiment has a low internal resistance. This is considered to be because the compound represented by the formula (1) that is used in the positive electrode active material 12 is less likely to react with the solid electrolyte that is used in the solid electrolyte layer 3. For example, in a case where the positive electrode active material 12 does not contain the compound represented by the formula (1) and is composed of LiMn₂O₄, an intermediate product is generated between the solid electrolyte layer 3 and the positive electrode active material 12. This intermediate product is LiMn₂O₄ or Li₂MnO₃ in which Li is excessively contained and is formed by the diffusion and reaction of Li in the solid electrolyte to them. This intermediate product and the Li-deficient solid electrolyte act as a cause of an increase in the internal resistance of the all-solid-state battery. In contrast, the compound represented by the formula (1) that is used in the positive electrode active material 12 is less likely to react with the solid electrolyte that is used in the solid electrolyte layer 3, which makes it less likely for an intermediate product to be generated.

Hitherto, the embodiment of the present invention has been described with reference to the drawings, but each configuration, a combination thereof and the like in each embodiment are simply examples, and the addition, omission, substitution and other modification of the configuration are possible within the scope of the gist of the present invention.

### [Examples]

### "Example 1"

### (Production of positive electrode paste)

For the production of a positive electrode current collector layer paste, a powder obtained by mixing Ag, Pd and LiNi_{0.5}Mn_{1.5}O₄ in fractions of 40:10:50 in terms of the volume ratio was used. Ethyl cellulose and dihydroterpineol were added to and mixed with this powder. The ethyl cellulose is a binder, and the dihydroterpineol is a solvent.

A positive electrode active material layer paste was produced by adding and mixing ethyl cellulose and dihydroterpineol to and with LiNi_{0.5}Mn_{1.5}O₄.

### (Production of solid electrolyte layer paste)

As starting materials, Li₂CO₃, SiO₂ and Li₃PO₄ were mixed in a mole ratio of 2:1:1. Regarding the mixing, the starting materials were wet-mixed together using water as a dispersion medium and a ball mill for 16 hours. The mixed starting materials were calcined at 950°C for two hours, and Li_{3.5}Si_{0.5}P_{0.5}O₄ was produced. In addition, 100 parts by mass of this calcined powder, 100 parts by mass of ethanol and 200 parts by mass of toluene were added to the ball mill and wet-mixed together. In addition, 16 parts of a polyvinyl butyral-based binder and 4.8 parts by mass of benzyl butyl phthalate were further injected thereinto and mixed together, thereby producing a solid electrolyte layer paste.

### (Production of negative electrode paste)

For a negative electrode paste, a powder obtained by mixing Ag, Pd and Li_{3.5}Si_{0.5}P_{0.5}O₄ in fractions of 40: 10:50 in terms of the volume ratio was used. Ethyl cellulose and dihydroterpineol were added to and mixed with this powder.

### (Production of all-solid-state battery)

Next, a positive electrode unit and a negative electrode unit were produced by the following procedure. First, a paste for a positive electrode active material was printed on a solid electrolyte layer sheet in a thickness of 5 µm using screen printing. Next, the printed paste for a positive electrode active material was dried at 80°C for five minutes. In addition, a paste for a positive electrode current collector was printed on the dried paste for a positive electrode active material in a thickness of 5 µm using screen printing. Next, the printed paste for a positive electrode current collector was dried at 80°C for five minutes. In addition, the paste for a positive electrode active material was printed again on the dried paste for a positive electrode current collector in a thickness of 5 µm using screen printing and dried. After that, the PET film was peeled off. A positive electrode unit having a positive electrode active material layer/a positive electrode current collector layer/a positive electrode active material layer laminated in this order on a main surface of a solid electrolyte layer was obtained as described above.

Next, the negative electrode paste was printed on a main surface of a solid electrolyte layer in a thickness of 10 µm. Next, the printed negative electrode paste was dried at 80°C for five minutes.

The laminated body was produced by overlapping five solid electrolyte layer sheets. Fifty electrode units (25 positive electrode units and 25 negative electrode units) were alternately laminated with the solid electrolyte unit interposed therebetween, thereby producing a laminated body. At this time, each unit was laminated in a zigzag manner so that the current collector layers of odd-numbered electrode units extend only from one end face and the current collector layers of even-numbered electrode units extend only from the other end face. Six solid electrolyte layer sheets were laminated on these laminated units. After that, this was formed by thermo-compression bonding and then cut, thereby producing laminated chips. After that, the laminated chips were simultaneously sintered to obtain a laminated body. For the simultaneous sintering, the chips were heated up to a sintering temperature of 800°C at a heating rate of 200 °C/hour in the atmosphere, held at the temperature for two hours and, after the sintering, naturally cooled.

Terminal electrodes 5 and 6 were attached to the sintered laminated body (sintered body) by a well-known method to produce an all-solid-state battery. The produced all-solid-state battery had a configuration shown in FIG. 6. There was no change in the volume ratio of each layer between a paste state before sintering and a state after sintering. Ag may be present as pure Ag or may be contained as an element contained in a AgPd alloy.

One hundred identical samples were created, and the internal resistance was obtained. The internal resistance was obtained as the average of these samples. The internal resistance was obtained by defining a step of performing, in an environment of 60°C, constant-current-charging (CC charging) at a constant current of 100 µA until the battery voltage reached 3.9 V, then, pausing the CC charging for one minute, and then performing discharging (CC discharging) at a constant current of 100 µA until the battery voltage reached 0 V as one cycle and dividing a voltage drop (V) at the beginning of the discharging from the pause at the 10^{th} cycle after the repetition of the cycle step 10 times by the discharge current (A). In addition, a sample produced under the same conditions was disassembled, and the volume percent (Va) of Ag and a Ag alloy in a negative electrode current collector layer was also obtained.

### "Examples 2 to 5"

Examples 2 to 5 are different from Example 1 in that LiNi_{0.5}Mn_{1.5}O₄ and LiMn₂O₄ were used as the positive electrode active materials. The other conditions were set in the same manner as in Example 1, and the internal resistances and the like were obtained. The volume ratios between the powders at the time of producing the pastes during the production of the positive electrode current collector layers and the positive electrode active material layers in Examples 2 to 5 were set as shown below.

### Example 2

Positive electrode current collector layer = Ag:Pd: LiNi_{0.5}Mn_{1.5}O₄:LiMn₂O₄ = 40:10:40:10
Positive electrode active material layer = LiNi_{0.5}Mn_{1.5}O₄:LiMn₂O₄ = 80:20

### Example 3

Positive electrode current collector layer = Ag:Pd: LiNi_{0.5}Mn_{1.5}O₄:LiMn₂O₄ = 40:10:30:20
Positive electrode active material layer = LiNi_{0.5}Mn_{1.5}O₄:LiMn₂O₄ = 60:40

### Example 4

Positive electrode current collector layer = Ag:Pd: LiNi_{0.5}Mn_{1.5}O₄:LiMn₂O₄ = 40:10:20:30
Positive electrode active material layer = LiNi_{0.5}Mn_{1.5}O₄:LiMn₂O₄ = 40:60

### Example 5

Positive electrode current collector layer =Ag:Pd: LiNi_{0.5}Mn_{1.5}O₄:LiMn₂O₄ = 40:10:10:40
Positive electrode active material layer = LiNi_{0.5}Mn_{1.5}O₄:LiMn₂O₄ = 20:80

### "Examples 6 to 10"

Examples 6 to 10 are each different from Examples 1 to 5 in that a solid electrolyte was changed from Li_{3.5}Si_{0.5}P_{0.5}O₄ to Li_{3.5}Si_{0.5}V_{0.5}O₄. The other conditions were set in the same manner as in Example 1, and the internal resistances and the like were obtained.

### "Comparative Example 1"

Comparative Example 1 is different from Example 1 in terms of the following points. In Comparative Example 1 as well, the internal resistance and the like were obtained in the same manner as in Example 1.
Difference 1: In the production of the positive electrode current collector layer paste, a powder obtained by mixing Ag and Pd in fractions of 80:20 in terms of the volume ratio was used.
Difference 2: In the production of the positive electrode active material layer paste, LiMn₂O₄ was used instead of LiNi_{0.5}Mn_{1.5}O₄.
Difference 3: The negative electrode paste was composed of two layers of a negative electrode current collector layer paste and a negative electrode active material layer paste. As the negative electrode current collector layer paste, a powder obtained by mixing Ag and Pd in fractions of 80:20 in terms of the volume ratio was used. The negative electrode active material layer paste was obtained by adding and mixing ethyl cellulose and dihydroterpineol to and with Li₄Ti₅O₁₂ (Li_{4/3}Ti_{5/3}O₄).

### "Comparative Example 2"

Comparative Example 2 is different from Example 1 in that LiMn₂O₄ was used as the positive electrode active material. In Comparative Example 2 as well, the internal resistance and the like were obtained in the same manner as in Example 1.

The results of Examples 1 to 10 and Comparative Example 1 or 2 are summarized in Table 1 below. "/" in Table 1 represents the percent during production, and the abundance percent after production approximately matches the percent after production.

**[Table 1]**

| | Positive electrode current collector layer | Positive electrode active material layer | Va (%) | Solid electrolyte layer | Negative electrode active material layer | Negative electrode current collector layer | Internal resistance (kΩ) |
|---|---|---|---|---|---|---|---|
| Example 1 | Ag/Pd/LiNi_{0.5}Mn_{1.5}O₄ = 40/10/50 | LiNi_{0.5}Mm_{1.5}O₄ | 53 | Li_{3.5}Si_{0.5}P_{0.5}O₄ | - | Ag/Pd/Li_{3.5}Si_{0.5}P_{0.5}O₄ = 40/10/50 | 31 |
| Example 2 | Ag/Pd/LiNi_{0.5}Mn_{1.5}O₄/LiMn₂O₄ = 40/10/40/10 | LiNi_{0.5}Mn_{1.5}O₄/LiMn₂O₄ = 80120 | 53 | Li_{3.5}Si_{0.5}P_{0.5}O₄ | - | Ag/Pd/Li_{3.5}Si_{0.5}P_{0.5}O₄ = 40/10/50 | 45 |
| Example 3 | Ag/Pd/LiNi_{0.5}Mn_{1.5}O₄/LiMn₂O₄ = 40/10/30/20 | LiNi_{0.5}Mn_{1.5}O₄/LiMn₂O₄ = 60/40 | 55 | Li_{3.5}Si_{0.5}P_{0.5}O₄ | - | Ag/Pd/Li_{3.5}Si_{0.5}P_{0.5}O₄ = 40/10/50 | 55 |
| Example 4 | Ag/Pd/LiNi_{0.5}Mn_{1.5}O₄/LiMn₂O₄ = 40/10/20/30 | LiNi_{0.5}Mn_{1.5}O₄/LiMn₂O₄ = 40/60 | 54 | Li_{3.5}Si_{0.5}P_{0.5}O₄ | - | Ag/Pd/Li_{3.5}Si_{0.5}P_{0.5}O₄ = 40/10/50 | 55 |
| Example 5 | Ag/Pd/LiNi_{0.5}Mn_{1.5}O₄/LiMn₃O₄ = 40/10/10/40 | LiNi_{0.5}Mm_{1.5}O₄/LiMn₂O₄ = 20/80 | 52 | Li_{3.5}Si_{0.5}P_{0.5}O₄ | - | Ag/Pd/Li_{3.5}Si_{0.5}P_{0.5}O₄ = 40/10/50 | 59 |
| Example 6 | Ag/Pd/LiNi_{0.5}Mm_{1.5}O₄ = 40/10/50 | LiNi_{0.5}Mn_{1.5}O₄ | 53 | Li_{3.5}Si_{0.5}V_{0.5}O₄ | - | Ag/Pd/Li_{3.5}Si_{0.5}V_{0.5}O₄ = 40/10/50 | 39 |
| Example 7 | Ag/Pd/LiNi_{0.5}Mn_{1.5}O₄/LiMn₂O₄ = 40/10/40/10 | LiNi_{0.5}Mn_{1.5}O₄/LiMn₂O₄ = 80/20 | 52 | Li_{3.5}Si_{0.5}V_{0.5}O₄ | - | Ag/Pd/Li_{3.5}Si_{0.5}V_{0.5}O₄ = 40/10/50 | 51 |
| Example 8 | Ag/Pd/LiNi_{0.5}Mn_{1.5}O₄/LiMn₂O₄ = 40/10/30/20 | LiNi_{0.5}Mn_{1.5}O₄/LiMn₂O₄ = 60/40 | 52 | Li_{3.5}Si_{0.5}V_{0.5}O₄ | - | Ag/Pd/Li_{3.5}Si_{0.5}V_{0.5}O₄ = 40/10/50 | 55 |
| Example 9 | Ag/Pd/LiNi_{0.5}Mn_{1.5}O₄/LiMn₂O₄ = 40/10/20/30 | LiNi_{0.5}Mn_{1.5}O₄/LiMn₂O₄ = 40/60 | 55 | Li_{3.5}Si_{0.5}V_{0.5}O₄ | - | Ag/Pd/Li_{3.5}Si_{0.5}V_{0.5}O₄ = 40/10/50 | 57 |
| Example 10 | Ag/Pd/LiNi_{0.5}Mn_{1.5}O₄/LiMn₂O₄ = 40/10/10/40 | LiNi_{0.5}Mn_{1.5}O₄/LiMn₂O₄ = 20/80 | 52 | Li_{3.5}Si_{0.5}V_{0.5}O₄ | - | Ag/Pd/Li_{3.5}Si_{0.5}V_{0.5}O₄ = 40/10/50 | 61 |
| Comparative Example 1 | Ag/Pd = 80/20 | LiMn₂O₄ | 53 | Li_{3.5}Si_{0.5}P_{0.5}O₄ | Li_{4/3}Ti_{5/3}O₄ | Ag/Pd = 80/20 | 133 |
| Comparative Example 2 | Ag/Pd/LiMn₂O₄ = 40/10/50 | LiMn₂O₄ | 54 | Li_{3.5}Si_{0.5}P_{0.5}O₄ | - | Ag/Pd/Li_{3.5}Si_{0.5}P_{0.5}O₄ = 40/10/50 | 112 |

When Example 1 and Comparative Example 1 are compared with each other, the internal resistance was lower in Example 1 than in Comparative Example 1. It is considered to be because, in Comparative Example 1, the positive electrode active material and the solid electrolyte reacted with each other and an intermediate product was generated.

### "Examples 11 to 18"

Examples 11 to 18 are different from Example 1 in that the composition ratio of the positive electrode active material was changed. The other conditions were set in the same manner as in Example 1, and the internal resistances and the like were obtained.

Example 11 is different from Example 1 in that LiNi_{0.1}Mn_{1.9}O₄ was used as the positive electrode active material that was contained in the positive electrode active material layer.

Example 12 is different from Example 1 in that LiNi_{0.9}Mn_{1.1}O₄ was used as the positive electrode active material that was contained in the positive electrode active material layer.

Example 13 is different from Example 1 in that LiNi_{0.1}Mn_{1.9}O₄ was used as the positive electrode active material that was contained in the positive electrode current collector layer.

Example 14 is different from Example 1 in that LiNi_{0.9}Mn_{1.1}O₄ was used as the positive electrode active material that was contained in the positive electrode current collector layer.

Example 15 is different from Example 1 in that LiNi_{0.1}Mn_{1.9}O₄ was used as the positive electrode active material that was contained in the positive electrode current collector layer and the positive electrode active material layer.

Example 16 is different from Example 1 in that LiNi_{0.4}Mn_{1.6}O₄ was used as the positive electrode active material that was contained in the positive electrode current collector layer and the positive electrode active material layer.

Example 17 is different from Example 1 in that LiNi_{0.6}Mn_{1.4}O₄ was used as the positive electrode active material that was contained in the positive electrode current collector layer and the positive electrode active material layer.

Example 18 is different from Example 1 in that LiNi_{0.9}Mn_{1.1}O₄ was used as the positive electrode active material that was contained in the positive electrode current collector layer and the positive electrode active material layer.

### "Examples 19 to 24"

Examples 19 to 24 are different from Example 1 in that the positive electrode active material was changed. The other conditions were set in the same manner as in Example 1, and the internal resistances and the like were obtained.

Example 19 is different from Example 1 in that LiCo_{0.1}Mn_{1.9}O₄ was used as the positive electrode active material that was contained in the positive electrode current collector layer and the positive electrode active material layer.

Example 20 is different from Example 1 in that LiCo_{0.5}Mn_{1.5}O₄ was used as the positive electrode active material that was contained in the positive electrode current collector layer and the positive electrode active material layer.

Example 21 is different from Example 1 in that LiCo_{0.9}Mn_{1.1}O₄ was used as the positive electrode active material that was contained in the positive electrode current collector layer and the positive electrode active material layer.

Example 22 is different from Example 1 in that LiTi_{0.1}Mn_{1.9}O₄ was used as the positive electrode active material that was contained in the positive electrode current collector layer and the positive electrode active material layer.

Example 23 is different from Example 1 in that LiTi_{0.5}Mn_{1.5}O₄ was used as the positive electrode active material that was contained in the positive electrode current collector layer and the positive electrode active material layer.

Example 24 is different from Example 1 in that LiTi_{0.9}Mn_{1.1}O₄ was used as the positive electrode active material that was contained in the positive electrode current collector layer and the positive electrode active material layer.

### "Example 25"

Example 25 is different from Example 1 in that the positive electrode was provided with a single-layer structure of the positive electrode current collector layer instead of the laminate structure of the positive electrode current collector layer and the positive electrode active material layer. The other conditions were set in the same manner as in Example 1, and the internal resistance and the like were obtained.

### "Examples 26 to 29"

Examples 26 to 29 are different from Example 1 in that the volume ratios of Ag, Pd and LiNi_{0.5}Mn_{1.5}O₄ in the positive electrode current collector layers were changed. The other conditions were set in the same manner as in Example 1, and the internal resistances and the like were obtained.

In Example 26, the volume ratio in the positive electrode current collector layer was set to Ag:Pd = 80:20. That is, in Example 26, LiNi_{0.5}Mn_{1.5}O₄ was not added at the time of producing the negative electrode current collector layer paste.

In Example 27, the volume ratio in the positive electrode current collector layer was set to Ag:Pd:LiNi_{0.5}Mm_{1.5}O₄ = 60:20:20.

In Example 28, the volume ratio in the positive electrode current collector layer was set to Ag:Pd:LiNi_{0.5}Mn_{1.5}O₄ = 50:15:35.

In Example 29, the volume ratio in the positive electrode current collector layer was set to Ag:Pd:LiNi_{0.5}Mn_{1.5}O₄ = 30:8:62.

### "Examples 30 to 33"

Examples 30 to 33 are different from Example 1 in that the composition ratio of the solid electrolyte that was contained in the solid electrolyte layer was changed. The other conditions were set in the same manner as in Example 1, and the internal resistances and the like were obtained.

In Example 30, Li_{3.1}Si_{0.1}P_{0.9}O₄ was used as the solid electrolyte in the solid electrolyte layer.

In Example 31, Li_{3.2}Si_{0.2}P_{0.8}O₄ was used as the solid electrolyte in the solid electrolyte layer.

In Example 32, Li_{3.4}Si_{0.4}P_{0.6}O₄ was used as the solid electrolyte in the solid electrolyte layer.

In Example 33, Li_{3.6}Si_{0.6}P_{0.4}O₄ was used as the solid electrolyte in the solid electrolyte layer.

Next, in Example 34 to Example 41, a Li-A alloy was added to the negative electrode current collector layers, and the same studies were performed. Here, the Li-Ag alloy was handled in a globe box with a dew point of -50°C, and for simultaneous sintering, chips were heated up to a sintering temperature of 800°C at a heating rate of 1200 °C/hour in an argon atmosphere, held at the temperature for 20 minutes and, after the sintering, naturally cooled.

### "Example 34"

Example 34 is different from Example 1 in that a part of Ag in the negative electrode current collector layer was replaced by a Li-Ag alloy (Li_{3.1}Ag). The amount of Li in the Li-Ag alloy was obtained by the quantitative analysis of X-ray diffraction (XRD). In the negative electrode current collector layer, the volume ratio of the Li-Ag alloy, Ag, Pd and Li_{3.5}Si_{0.5}P_{0.5}O₄ was 2:38: 10:50. The other conditions were set in the same manner as in Example 1, and the internal resistance of the all-solid-state battery was obtained.

### "Example 35"

Example 35 is different from Example 34 in that the Li-Ag alloy (Li_{3.1}Ag) in the negative electrode current collector layer was changed to another Li-Ag alloy (Li_{4.7}Ag). The other conditions were set in the same manner as in Example 34, and the internal resistance of the all-solid-state battery was obtained.

### "Examples 36 and 37"

Examples 36 and 37 are each different from Example 34 or 35 in that Pd was not added at the time of creating the negative electrode current collector layer. The volume ratios in the negative electrode current collector layers of Examples 36 and 37 were set to Li-Ag alloy:Ag:Li_{3.5}Si_{0.5}P_{0.5}O₄ = 2:48:50. The other conditions were set in the same manner as in Example 34, and the internal resistances of the all-solid-state batteries were obtained.

### "Examples 38 to 41"

Examples 38 to 41 are each different from Example 34 to 37 in that the composition of the solid electrolyte that was added to the solid electrolyte layer and the negative electrode current collector layer was replaced by Li_{3.5}Si_{0.5}V_{0.5}O₄. The other conditions were set in the same manner as in Example 34, and the internal resistances of the all-solid-state batteries were obtained.

**[Table 2]**

| | Positive electrode current collector layer | Positive electrode active material layer | Va (%) | Solid electrolyte layer | Negative electrode active material layer | Negative electrode current collector layer | Internal resistance (kΩ) |
|---|---|---|---|---|---|---|---|
| Example 11 | Ag/Pd/LiNi_{0.5}Mn_{1.5}O₄ = 40/10/50 | LiNi_{0.1}Mn_{1.9}O₄ | 55 | Li_{3.5}Si_{0.5}P_{0.5}O₄ | - | Ag/Pd/Li_{3.5}Si_{0.5}P_{0.5}O₄ = 40/10/50 | 49 |
| Example 12 | Ag/Pd/LiNi_{0.5}Mn_{1.5}O₄ = 40/10/50 | LiNi_{0.9}Mn_{1.1}O₄ | 55 | Li_{3.5}Si_{0.5}P_{0.5}O₄ | - | Ag/Pd/Li_{3.5}Si_{0.5}P_{0.5}O₄ = 40/10/50 | 43 |
| Example 13 | Ag/Pd/LiNi_{0.1}Mn_{1.9}O₄ = 40/10/50 | LiNi_{0.5}Mm_{1.5}O₄ | 53 | Li_{3.5}Si_{0.5}P_{0.5}O₄ | - | Ag/Pd/Li_{3.5}Si_{0.5}P_{0.5}O₄ = 40/10/50 | 43 |
| Example 14 | Ag/Pd/LiNi_{0.9}Mn_{1.1}O₄ = 40/10/50 | LiNi_{0.5}Mm_{1.5}O₄ | 55 | Li_{3.5}Si_{0.5}P_{0.5}O₄ | - | Ag/Pd/Li_{3.5}Si_{0.5}P_{0.5}O₄ = 40/10/50 | 45 |
| Example 15 | Ag/Pd/LiNi_{0.1}Mn_{1.9}O₄ = 40/10/50 | LiNi_{0.1}Mn_{1.9}O₄ | 55 | Li_{3.5}Si_{0.5}P_{0.5}O₄ | - | Ag/Pd/Li_{3.5}Si_{0.5}P_{0.5}O₄ = 40/10/50 | 51 |
| Example 16 | Ag/Pd/LiNi_{0.4}Mn_{1.6}O₄ = 40/10/50 | LiNi_{0.4}Mn_{1.6}O₄ | 55 | Li_{3.5}Si_{0.5}P_{0.5}O₄ | - | Ag/Pd/Li_{3.5}Si_{0.5}P_{0.5}O₄ = 40/10/50 | 35 |
| Example 17 | Ag/Pd/LiNi_{0.6}Mn_{1.4}O₄ = 40/10/50 | LiNi_{0.6}Mn_{1.4}O₄ | 54 | Li_{3.5}Si_{0.5}P_{0.5}O₄ | - | Ag/Pd/Li_{3.5}Si_{0.5}P_{0.5}O₄ = 40/10/50 | 31 |
| Example 18 | Ag/Pd/LiNi_{0.9}Mn_{1.1}O₄ = 40/10/50 | LiNi_{0.9}Mn_{1.1}O₄ | 54 | Li_{3.5}Si_{0.5}P_{0.5}O₄ | - | Ag/Pd/Li_{3.5}Si_{0.5}P_{0.5}O₄ = 40/10/50 | 49 |
| Example 19 | Ag/Pd/LiCo_{0.1}Mn_{1.9}O₄ = 40/10/50 | LiCo_{0.1}Mn_{1.9}O₄ | 54 | Li_{3.5}Si_{0.5}P_{0.5}O₄ | - | Ag/Pd/Li_{3.5}Si_{0.5}Po_{0.5}O₄ = 40/10/50 | 47 |
| Example 20 | Ag/Pd/LiCo_{0.5}Mn_{1.5}O₄ = 40/10/50 | LiCo_{0.5}Mn_{1.5}O₄ | 54 | Li_{3.5}Si_{0.5}P_{0.5}O₄ | - | Ag/Pd/Li_{3.5}Si_{0.5}P_{0.5}O₄ = 40/10/50 | 31 |
| Example 21 | Ag/Pd/LiCo_{0.9}Mn_{1.1}O₄ = 40/10/50 | LiCo_{0.9}Mn_{1.1}O₄ | 53 | Li_{3.5}Si_{0.5}P_{0.5}O₄ | - | Ag/Pd/Li_{3.5}Si_{0.5}P_{0.5}O₄ = 40/10/50 | 55 |

**[Table 3]**

| | Positive electrode current collector layer | Positive electrode active material layer | Va (%) | Solid electrolyte layer | Negative electrode active material layer | Negative electrode current collector layer | Internal resistance (kΩ) |
|---|---|---|---|---|---|---|---|
| Example 22 | Ag/Pd/LiTi_{0.1}Mn_{1.9}O₄ = 40/10/50 | LiTi_{0.1}Mn_{1.9}O₄ | 54 | Li_{3.5}Si_{0.5}P_{0.5}O₄ | - | Ag/Pd/Li_{3.5}Si_{0.5}P_{0.5}O₄ = 40/10/50 | 59 |
| Example 23 | Ag/Pd/LiTi_{0.5}Mn_{1.5}O₄ = 40/10/50 | LiTi_{0.5}Mn_{1.5}O₄ | 55 | Li_{3.5}Si_{0.5}P_{0.5}O₄ | - | Ag/Pd/Li_{3.5}Si_{0.5}P_{0.5}O₄ = 40/10/50 | 33 |
| Example 24 | Ag/Pd/LiTi_{0.9}Mn_{1.1}O₄ = 40/10/50 | LiTi_{0.9}Mn_{1.1}O₄ | 54 | Li_{3.5}Si_{0.5}P_{0.5}O₄ | - | Ag/Pd/Li_{3.5}Si_{0.5}P_{0.5}O₄ = 40/10/50 | 63 |
| Example 25 | Ag/Pd/LiNi_{0.5}Mn_{1.5}O₄ = 40/10/50 | - | 55 | Li_{3.5}Si_{0.5}P_{0.5}O₄ | - | Ag/Pd/Li_{3.5}Si_{0.5}P_{0.5}O₄ = 40/10/50 | 45 |
| Example 26 | Ag/Pd = 80/20 | LiNi_{0.5}Mn_{1.5}O₄ | 100 | Li_{3.5}Si_{0.5}P_{0.5}O₄ | - | Ag/Pd/Li_{3.5}Si_{0.5}P_{0.5}O₄ = 40/10/50 | 57 |
| Example 27 | Ag/Pd/LiNi_{0.5}Mn_{1.5}O₄ = 60/20/20 | LiNi_{0.5}Mn_{1.5}O₄ | 85 | Li_{3.5}Si_{0.5}P_{0.5}O₄ | - | Ag/Pd/Li_{3.5}Si_{0.5}P_{0.5}O₄ = 40/10/50 | 33 |
| Example 28 | Ag/Pd/LiNi_{0.5}Mn_{1.5}O₄ = 50/15/35 | LiNi_{0.5}Mm_{1.5}O₄ | 68 | Li_{3.5}Si_{0.5}P_{0.5}O₄ | - | Ag/Pd/Li_{3.5}Si_{0.5}P_{0.5}O₄ = 40/10/50 | 39 |
| Example 29 | Ag/Pd/LiNi_{0.5}Mn_{1.5}O₄ = 30/8/62 | LiNi_{0.5}Mn_{1.5}O₄ | 40 | Li_{3.5}Si_{0.5}P_{0.5}O₄ | - | Ag/Pd/Li_{3.5}Si_{0.5}P_{0.5}O₄ = 40/10/50 | 43 |
| Example 30 | Ag/Pd/LiNi_{0.5}Mn_{1.5}O₄ = 40/10/50 | LiNi_{0.5}Mm_{1.5}O₄ | 52 | Li_{3.1}Si_{0.1}P_{0.9}O₄ | - | Ag/Pd/Li_{3.1}Si_{0.1}P_{0.9}O₄ = 40/10/50 | 59 |
| Example 31 | Ag/Pd/LiNi_{0.5}Mn_{1.5}O₄ = 40/10/50 | LiNi_{0.5}Mn_{1.5}O₄ | 53 | Li_{3.2}Si_{0.2}P_{0.8}O₄ | - | Ag/Pd/Li_{3.2}Si_{0.2}P_{0.8}O₄ = 40/10/50 | 37 |
| Example 32 | Ag/Pd/LiNi_{0.5}Mn_{1.5}O₄ = 40/10/50 | LiNi_{0.5}Mn_{1.5}O₄ | 55 | Li_{3.4}Si_{0.4}P_{0.6}O₄ | - | Ag/Pd/Li_{3.4}Si_{0.4}P_{0.6}O₄ = 40/10/50 | 33 |
| Example 33 | Ag/Pd/LiNi_{0.5}Mn_{1.5}O₄ = 40/10/50 | LiNi_{0.5}Mn_{1.5}O₄ | 54 | Li_{3.6}Si_{0.6}P_{0.4}O₄ | - | Ag/Pd/Li_{3.6}Si_{0.6}P_{0.4}O₄ = 40/10/50 | 31 |

**[Table 4]**

| | Positive electrode | Positive electrode | Va | Solid electrolyte | Negative electrode | Negative electrode current | Internal |
|---|---|---|---|---|---|---|---|
| | current collector layer | active material layer | (%) | layer | active material layer | collector layer | resistance (kΩ) |
| Example 34 | Ag/Pd/LiNi_{0.5}Mn_{1.5}O₄ = 40/10/50 | LiNi_{0.5}Mn_{1.5}O₄ | 53 | Li_{3.5}Si_{0.5}P_{0.5}O₄ | - | Li_{3.1}Ag/Ag/Pd/Li_{3.5}Si_{0.5}P_{0.5}O₄ = 2/38/10/50 | 25 |
| Example 35 | Ag/Pd/LiNi_{0.5}Mn_{1.5}O₄ = 40/10/50 | LiNi_{0.5}Mm_{1.5}O₄ | 53 | Li_{3.5}Si_{0.5}P_{0.5}O₄ | - | Li_{4.7}Ag/Ag/Pd/Li_{3.5}Si_{0.5}P_{0.5}O₄ = 2/38/10/50 | 22 |
| Example 36 | Ag/Pd/LiNi_{0.5}Mn_{1.5}O₄ = 40/10/50 | LiNi_{0.5}Mm_{1.5}O₄ | 53 | Li_{3.5}Si_{0.5}P_{0.5}O₄ | - | Li_{3.1}Ag/Ag/Li_{3.5}Si_{0.5}P_{0.5}O₄ = 2/48/50 | 31 |
| Example 37 | Ag/Pd/LiNi_{0.5}Mn_{1.5}O₄ = 40/10/50 | LiNi_{0.5}Mn_{1.5}O₄ | 53 | Li_{3.5}Si_{0.5}P_{0.5}O₄ | - | Li_{4.7}Ag/Ag/Li_{3.5}Si_{0.5}P_{0.5}O₄ = 2/48/50 | 29 |
| Example 38 | Ag/Pd/LiNi_{0.5}Mn_{1.5}O₄ = 40/10/50 | LiNi_{0.5}Mm_{1.5}O₄ | 53 | Li_{3.5}Si_{0.5}V_{0.5}O₄ | - | Li_{3.1}Ag/Ag/Pd/Li_{3.5}Si_{0.5}V_{0.5}O₄ = 2/38/10/50 | 32 |
| Example 39 | Ag/Pd/LiNi_{0.5}Mm_{1.5}O₄ = 40/10/50 | LiNi_{0.5}Mn_{1.5}O₄ | 53 | Li_{3.5}Si_{0.5}V_{0.5}O₄ | - | Li_{4.7}Ag/Ag/Pd/Li_{3.5}Si_{0.5}V_{0.5}O₄ = 2/38/10/50 | 28 |
| Example 40 | Ag/Pd/LiNi_{0.5}Mn_{1.5}O₄ = 40/10/50 | LiNi_{0.5}Mm_{1.5}O₄ | 53 | Li_{3.5}Si_{0.5}V_{0.5}O₄ | - | Li_{3.1}Ag/Ag/Li_{3.5}Si_{0.5}V_{0.5}O₄ = 2/48/50 | 35 |
| Example 41 | Ag/Pd/LiNi_{0.5}Mn_{1.5}O₄ = 40/10/50 | LiNi_{0.5}Mn_{1.5}O₄ | 53 | Li_{3.5}Si_{0.5}V_{0.5}O₄ | - | Li_{4.7}Ag/Ag/Li_{3.5}Si_{0.5}V_{0.5}O₄ = 2/48/50 | 31 |

### Reference Signs List

1 Positive electrode
1A, 1C, 1D, 1E Positive electrode current collector layer
1B Positive electrode active material layer
1F Intermediate layer
2, 2D Negative electrode
2A, 2C Negative electrode current collector layer
2B Negative electrode active material layer
3 Solid electrolyte layer
4 Laminate
5, 6 Terminal electrode
10 All-solid-state battery
11 Positive electrode current collector
12 Positive electrode active material
13 Oxide
21 Negative electrode current collector
22 Negative electrode active material
23 Solid electrolyte

## Claims

1. An all-solid-state battery comprising:
a sintered body having a positive electrode, a negative electrode and a solid electrolyte layer that is between the positive electrode and the negative electrode,
wherein the positive electrode contains a compound having a spinel structure,
the solid electrolyte layer contains a solid electrolyte having a γ-Li₃PO₄-type crystal structure,
the compound having a spinel structure is represented by Li_{α}M_{β}Mn_{2-β}O₄ ··· (1), and
in the formula (1), M is one or more atoms selected from transition metals, 0.8 ≤ α ≤ 1.2 is satisfied, and 0.1 ≤ β ≤ 0.9 is satisfied.

2. The all-solid-state battery according to Claim 1,
wherein M is Ni, the formula (1) is represented by Li_{α}Ni_{β}Mn_{2-β}O₄ ··· (2), and
in the formula (2), 0.4 ≤ β ≤ 0.6 is satisfied.

3. The all-solid-state battery according to Claim 1,
wherein the positive electrode further contains one or more selected from Ag or a Ag alloy.

4. The all-solid-state battery according to Claim 1,
wherein the positive electrode includes a first layer and a second layer,
the first layer contains the compound and one or more selected from Ag or a Ag alloy, and
the second layer is in contact with at least one main surface of the first layer.

5. The all-solid-state battery according to Claim 4,
wherein a total volume percent of Ag and the Ag alloy in the first layer is 40% or more and 85% or less.

6. The all-solid-state battery according to Claim 1,
wherein a solid electrolyte that is contained in the solid electrolyte layer contains Li₃₊ₓSiₓP₁₋ₓO₄ (0.2 ≤ x ≤ 0.6).
